# FASCICULE DE BREVET EUROPEEN

(11) **EP 2 185 750 B1**
(45) Date de publication et mention de la délivrance du brevet: **04.09.2013**
(21) Numéro de dépôt: 08835761.1
(22) Date de dépôt: 05.09.2008
(51) Int. Cl.: D01D 5/06, D01D 5/24, D01F 2/28, D01F 4/00, D01F 9/00, A61L 27/50, B01D 69/08, C12M 1/12, C12M 3/06, C08B 37/00

(54) **FIBRES CREUSES, NOTAMMENT MULTI MEMBRANAIRES, ET LEUR PROCEDE DE PREPARATION PAR FILAGE**
HOHLFASERN, INSBESONDERE MIT MEHREREN MEMBRANEN, SOWIE VERFAHREN ZU IHRER HERSTELLUNG DURCH SPINNEN
HOLLOW, PARTICULARLY MULTIPLE-MEMBRANE, FIBRES, AND THEIR METHOD OF PREPARATION BY SPINNING

(30) Priorité: 07.09.2007 FR 0757436
(43) Date de publication de la demande: 19.05.2010
(73) Titulaire: Université Claude Bernard Lyon I, 69622 Villeurbanne Cedex (FR); Centre National de la Recherche Scientifique, 75794 Paris Cedex 16 (FR)
(72) Inventeur: DOMARD, Alain, F-69006 LYON (FR); DAVID, Laurent, F-69004 LYON (FR); RIVAS, Ricio, C.P. 76010 MEXICO (MX)
(74) Mandataire: Sarlin, Laure V.
(86) Numéro de dépôt international: PCT/FR2008/051587
(87) Numéro de publication internationale: WO 2009/044053

(56) Documents cités:
- EP-A- 0 341 979
- FR-A- 2 148 784
- FR-A- 2 380 052
- FR-A1- 2 473 562
- MODRZEJEWSKA ZOFIA ET AL: "Chitosan Hollow Fiber Membranes" BIOPOLYMERS, NEW YORK, NY, US, vol. 73, no. 1, 1 janvier 2004 (2004-01-01), pages 61-68, XP002480073 ISSN: 0006-3525 cité dans la demande

## Description

La présente invention se rapporte à un procédé de préparation de fibres de polysaccharide, par filage voie humide sous coagulation. L'invention concerne également des fibres creuses, notamment constituées d'un même polysaccharide naturel ou naturel modifié, à l'état d'hydrogel physique ou en partie déshydraté, lesdites fibres comportant au moins sur leur longueur deux membranes coaxiales superposées séparées entre elles par un espace inter membranaire.

Avec les procédés existants de préparation de fibres creuses de type membranaire, seuls des systèmes mono- et bi-membranaires ont pu être élaborés. La publication de Wang *et al.* [6] décrit des fibres creuses bi membranaires dont les membranes sont constituées de deux composés polymériques différents, choisis parmi le polysulfone, le polyéthersulfone, le polyétherimide, l'acétobutyrate de cellulose. La publication de Tamura *et al.* [7] divulgue des filaments formés d'un coeur d'alginate recouvert d'une couche de chitosane, sans espace intermembranaire (*les références numériques entre parenthèses carrées se rapportent aux références bibliographiques figurant à la fin de la description*).

Par ailleurs, il est connu d'élaborer des fibres creuses par filage par voie humide en utilisant une filière annulaire, c'est-à-dire une filière constituée de deux cylindres concentriques séparés par un espace permettant de générer un tube creux au cours de l'extrusion. La solution liquide est extrudée à travers l'espace annulaire de la filière tandis qu'un agent coagulant interne sous forme liquide [1-3], gazeuse [4] ou de l'air comprimé [5] est libéré à l'intérieur du tube extrudé pour former la paroi interne délimitant le canal central de la fibre, le tube extrudé étant ensuite immergé dans un bain de coagulation pour former la paroi externe de la fibre.

Cette technique de filage est complexe du fait de l'utilisation de la filière annulaire, qui nécessite l'introduction d'un agent coagulant à l'intérieur du tube extrudé. De plus, il s'avère qu'avec cette technique, il est difficile de contrôler efficacement le diamètre du canal central de la fibre.

En outre, avec cette technique de filage de fibres creuses, il n'est possible de faire varier le diamètre interne de la fibre, c'est-à-dire le diamètre du canal central, qu'en changeant la taille de la filière annulaire. De plus, les fibres ainsi obtenues présentent des diamètres internes très élevés (350-700 µm), ne convenant pas à certaines applications [1-2,6], par exemple dans le domaine des cultures cellulaires ou des connections nerveuses, dans lequel il est souvent préférable de ne pas dépasser un diamètre interne de 100 µm.

Par ailleurs, on connaît du document FR 2 148 784 un procédé de préparation de fibres polymères synthétiques ayant un noyau creux ou semi creux, par extrusion à travers une filière à trous circulaires. Plus particulièrement, le procédé décrit dans ce document comprend le filage d'une solution ou d'une dispersion d'un polymère comprenant de l'acrylonitrile.

Enfin, on connaît du document FR 2 380 052 des membranes de dialyse formées à partir de deux ou plusieurs couches liées solidement les unes aux autres. Ces membranes multi couches et multi composants sont effectivement constituées de deux ou plusieurs couches différentes, fortement adhérentes, c'est-à-dire dépendantes les unes des autres. Par ailleurs, les couches successives sont produites par co-extrusion à l'aide d'une filière pluri annulaire.

La présente invention se propose de remédier aux inconvénients précités de l'art antérieur. Elle a pour premier objectif de fournir un procédé de préparation de fibres creuses, notamment multi membranaires, simple à mettre en oeuvre et permettant en particulier d'obtenir une variété de fibres creuses qui comportent plusieurs membranes coaxiales séparées entre elles par un espace inter membranaire. Ces fibres comportent le plus souvent un canal central, comme les fibres creuses connues. Mais elles peuvent aussi ne pas comporter de canal central, auquel cas, par extension par rapport à la terminologie habituelle, elles sont, dans le présent texte, dites creuses du fait de la présence de l'espace ou des espaces inter membranaire.

Ce procédé est particulièrement adapté à la préparation de fibres de polysaccharide.

A cet effet, l'invention concerne, selon un premier aspect, un procédé de préparation de fibres creuses par filage voie humide sous coagulation, ledit procédé comprenant une étape (a) de préparation d'une solution filable d'un assemblage macromoléculaire coagulable. De manière caractéristique, il comprend ensuite :
b) une étape d'extrusion de la solution de l'assemblage macromoléculaire coagulable à travers une filière normale, notamment tubulaire ;
c) au moins un cycle de coagulation partielle, comprenant d'une part, une étape de coagulation consistant à introduire la solution de l'assemblage macromoléculaire coagulable extrudée dans un bain de coagulation contenant un agent de coagulation, dont la diffusion dans ladite solution permet de faire passer localement l'assemblage macromoléculaire à l'état coagulé, dans des conditions permettant d'obtenir une fibre dont la section est partiellement coagulée, et, d'autre part, une étape interruption de la coagulation suivant chaque étape de coagulation ;
d) et une étape de réception, notamment par enroulement, de la fibre creuse obtenue, caractérisé en ce que le solution filable est une solution de polyseccharide telle que definie dans le revendication 1.

Par l'expression « filière normale » on entend ici une filière qui n'est pas annulaire ou qui ne met pas en oeuvre un élément central de formation d'un canal central dans la fibre par coagulation interne, en complément de la coagulation externe.

Par l'expression « solution filable », on comprend une solution d'un assemblage macromoléculaire dont les caractéristiques, notamment rhéologiques, la rendent apte à être extrudée de manière continue.

Par l'expression « assemblage macromoléculaire coagulable», on comprend toute macromolécule, notamment de type polymère ou protéine, qui peut passer d'une phase liquide à une phase solide par l'action d'un agent de traitement, dit agent de coagulation.

Contrairement aux procédés existants de préparation de fibres creuses, l'invention ne met en oeuvre ni une filière annulaire ni un agent coagulant interne. Elle est basée sur une interruption volontaire et contrôlée, au cours du filage, du phénomène physico-chimique de la coagulation externe, par exemple par une simple étape de lavage permettant d'éliminer l'agent coagulant ou tout au moins de diminuer sa concentration , arrêtant de ce fait le phénomène de coagulation.

S'il n'y a qu'une seule étape de coagulation partielle et une seule étape d'interruption de coagulation, on obtient une fibre creuse mono membranaire avec un canal central dont le diamètre interne est ajustable en faisant varier les conditions desdites étapes.

S'agissant de la préparation de fibres multi membranaires, le procédé comporte plusieurs cycles, chacun étant constitué d'une étape de coagulation partielle et d'une étape d'interruption de la coagulation. Chaque cycle permet la réalisation dans la fibre d'une section coagulée, correspondant à une membrane. De plus, il a été constaté que, dans ce cas, il se forme entre chaque cycle un espace libre entre les deux sections coagulées : il s'agit de l'espace inter membranaire.

Ainsi, le procédé selon l'invention permet de faire varier le nombre de membranes en fonction de l'application souhaitée, en adaptant le nombre de cycles et aussi le diamètre de la filière.

En outre, s'agissant de la préparation de fibres multi membranaires à canal central, le présent procédé permet de modifier le diamètre interne du canal central, en contrôlant l'interruption de la coagulation lors du dernier cycle, de manière à ce que le coeur de la fibre reste sous forme de solution liquide, non coagulée.

Grâce au procédé de l'invention, il est possible d'obtenir des fibres creuses, mono ou multi membranaires, dont le diamètre interne du canal central va de l'ordre de 50 µm jusqu'au-delà de 1 mm.

Dans son concept général, le procédé de filage de l'invention s'applique à une gamme large de polysaccharides incluant les polysaccharides naturels comme le chitosane, l'acide hyaluronique, les alginates, les pectines ainsi que les polysaccharides naturels modifiés comme la carboxyméthylcellulose (CMC).

Dans cette application, le bain de coagulation est déterminé en sorte que sa diffusion dans la solution de polysaccharide permet de faire passer le saccharide à l'état d'hydrogel physique.

Par hydrogel, on entend une masse visco-élastique comportant au moins 80% et de préférence au moins 90% en masse d'eau. L'hydrogel est dit physique - par opposition à l'hydrogel dit chimique dans lequel les interactions sont de type liaison covalente - lorsque les interactions responsables de la réticulation inter-chaînes sont de type physique, notamment des liaisons hydrogènes et des interactions hydrophobes.

S'agissant tout particulièrement du chitosane, qui est un dérivé partiellement voire totalement désacétylé de la chitine, il convient de tenir compte de son degré d'acétylation (DA) et de sa masse molaire pour la solution filable coagulable à mettre en oeuvre. Plus la masse molaire du chitosane est faible et plus il faut augmenter la concentration de chitosane dans la solution pour obtenir une viscosité la rendant filable, ce qui entraîne corrélativement d'adapter les paramètres de coagulation, en augmentant les temps de contact avec le bain de coagulation et/ou la concentration du bain de coagulation en agent coagulant. En ce qui concerne le degré d'acétylation, il est possible, selon l'invention, d'utiliser des chitosanes ayant un degré d'acétylatlon compris entre 0% et 50%, sachant toutefois que plus le DA augmente et plus les propriétés mécaniques de la section coagulée - donc la membrane formée lors de la coagulation - sont faibles.

Ainsi de préférence, la solution filable est une solution de chitosane ayant un degré d'acétylatlon inférieur ou égal à 5%, sauf bien sûr pour des applications particulières où, au contraire, la faible rigidité et/ou la fragilité des membranes est requise, par exemple lorsque l'on souhaite accélérer leur biodégradation.

Par ailleurs, l'invention a pour but de proposer des fibres creuses, multi membranaires de polysaccharides, lesdites fibres présentant un faible diamètre interne du canal central et étant ainsi aptes à être utilisées dans des applications biomédicales spécifiques.

Ainsi, selon un deuxième aspect, l'invention concerne une fibre creuse multi membranaire constituée d'un polysaccharide tel que defini dans la revendication 9, ladite fibre étant caractérisée en ce qu'elle comporte au moins deux membranes coaxiales, de préférence séparées l'une de l'autre par un espace inter membranaire.

De manière préférée, l'invention concerne des fibres creuses multi membranaires à base de chitosane, dont les membranes sont à l'état d'hydrogel physique.

Dans cette variante préférée, les fibres peuvent être soumises à un traitement complémentaire de déshydratation partielle, destiné à réduire la teneur en eau de l'hydrogel en sorte de moduler la rigidité et la porosité des membranes et donc des fibres.

Le dispositif de filage pour la mise en oeuvre du procédé selon l'invention est lui aussi de construction simplifiée, en comparaison avec les dispositifs connus, du fait que le filage ne nécessite qu'un type de bain de coagulation externe et ne requiert pas de bain de coagulation interne pour la formation du canal central de la fibre.

Un dispositif de filage en continu, conçu pour la mise en oeuvre du procédé précité, comprend:
a) successivement les éléments suivants :
   - des moyens d'extrusion d'une solution filable d'un assemblage macromoléculaire coagulable, comprenant une filière normale,
   - au moins un réacteur de coagulation destiné à contenir un bain de coagulation, suivi d'un réacteur d'interruption de coagulation destiné à contenir un bain apte à arrêter la coagulation, notamment un bain de lavage,
   - et des moyens d'enroulement de la fibre partiellement coagulée,
b) et des moyens de contrôle des conditions de coagulation et d'interruption de la coagulation.

L'invention concerne également l'utilisation des fibres creuses multi membranaires précitées pour élaborer des biomatériaux.

D'autres caractéristiques et avantages de l'invention apparaîtront à la lecture de la description détaillée et des exemples de réalisation qui vont suivre, ainsi que des figures annexées dans lesquelles :
- la figure 1 représente un schéma de principe illustrant les différentes étapes du procédé de filage en continu à coagulation interrompue d'une fibre creuse multi membranaire de l'invention,
- la figure 2 représente la structure d'une fibre creuse de chitosane avec quatre membranes, obtenue suivant le procédé de la figure 1,
- et la figure 3 représente la structure macroscopique de la fibre de la figure 2, vue en section transversale agrandie.

La présente invention se rapporte de manière générale à un procédé de préparation de fibres creuses par filage voie humide sous coagulation, à partir d'une solution filable d'un polysaccharide. Dans l'exemple détaillé qui va être décrit, il sera principalement question d'une solution filable de chitosane, mais cela ne doit pas être restrictif de la présente invention.

La solution de polysaccharide est extrudée à travers une filière normale, notamment tubulaire - en tout cas une filière qui n'est pas annulaire - dans des conditions de pression permettant de produire en continu un jonc de ladite solution. On désigne par le terme « jonc » un tube plein par opposition au tube creux obtenu avec une filière annulaire. Le jonc en question, formé par la solution de polysaccharide extrudée, est introduit dans un bain de coagulation, pour y subir une coagulation partielle.

La coagulation est obtenue grâce à la diffusion, cinétiquement contrôlée, de l'agent de coagulation contenu dans le bain de coagulation, depuis l'extérieur du jonc, dans la solution de polysaccharide, ce qui permet de faire passer localement le polysaccharide à l'état d'hydrogel physique et obtenir une fibre qui comporte, en section transversale, une zone ou section partiellement coagulée.

La coagulation n'est que partielle du fait qu'intervient nécessairement une étape d'interruption de la coagulation avant que la coagulation du jonc de solution de polysaccharide ne soit totale.

Ainsi, la réaction de coagulation est interrompue par exemple par un lavage à l'eau afin d'obtenir sur le jonc extrudé de polysaccharide une section externe coagulée constituant une membrane externe ou 'couronne' - dans laquelle le polysaccharide est à l'état d'hydrogel physique - qui enveloppe un 'coeur' - dans lequel le polysaccharide est encore à l'état de solution liquide. Ce premier cycle de coagulation/lavage permet de former une fibre partiellement coagulée et donc une fibre creuse mono membranaires, dont le canal central est obtenu par élimination de la solution liquide restante par un simple lavage à l'eau.

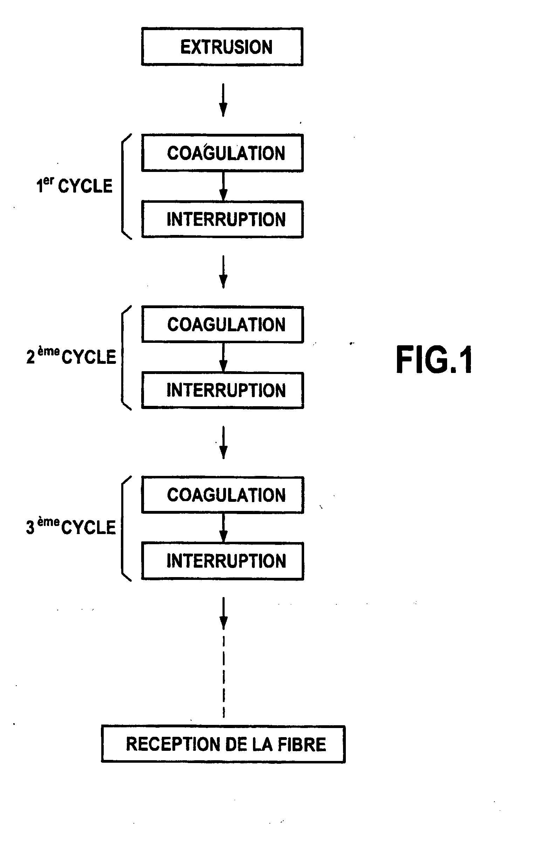

Pour former des fibres multi membranaires, selon la figure 1, le jonc extrudé de la solution de polysaccharide est soumis non pas à un seul mais à plusieurs cycles successifs de coagulation/lavage. Lors du deuxième cycle, le bain de coagulation diffuse à travers la membrane externe et la deuxième membrane complémentaire est formée en étant séparée de la membrane externe d'un espace libre qui constitue un espace inter membranaire. Il en est de même cycle après cycle, chaque nouvelle membrane étant formée vers l'intérieur de la fibre et étant séparée de la précédente par un espace inter membranaire.

Pour l'obtention de fibres creuses comportant un canal central, il suffit que le dernier cycle intervienne en sorte que subsiste au coeur de la fibre une solution liquide de polysaccharide qui est finalement éliminée par lavage à l'eau.

Dans une variante de réalisation du procédé, on laisse se dérouler la coagulation jusqu'à son terme au cours d'une ultime étape de coagulation, pour former une fibre avec un coeur coagulé dans lequel le polysaccharide est à l'état d'hydrogel physique. On peut ainsi obtenir des fibres multi membranaires qui sont creuses du fait de la présence du ou des espaces inter membranaires mais qui ne comportent pas de canal central.

On comprend que ce sont les conditions opératoires de chaque cycle coagulation/lavage qui vont déterminer la constitution de chaque membrane, notamment son épaisseur, et les conditions opératoires des cycles successifs qui vont déterminer la taille de l'espace inter membranaire séparant deux membranes adjacentes.

Pour une filière de 1,9 mm de diamètre interne, le diamètre externe des fibres peut être réglé entre 1,4 et 2,5 mm par la variation de la vitesse d'entraînement à la sortie de filière. De préférence, pour la production de fibres creuses multi membranaires, le diamètre externe de la filière est compris entre 1,9 et 2,5 mm.

Il est également possible de faire varier le diamètre interne du canal central des fibres car cette taille dépend du degré de coagulation final ou du nombre et de l'épaisseur des membranes intermédiaires formées.

Le procédé selon l'invention permet d'obtenir des fibres creuses mono ou multi membranaires de diamètre interne allant de 50 µm jusqu'au-delà de 1 µm.

Le temps de séjour du jonc extrudé de solution de polysaccharide puis, dans les cycles ultérieurs, de la fibre partiellement coagulée dans les bains de coagulation et dans les bains de lavage est réglé par la vitesse d'enroulement de la fibre et de la distance qu'elle parcourt dans les réacteurs correspondants. Pour simplifier, on garde constantes la vitesse d'enroulement et la concentration du bain de coagulation. Par contre, la distance parcourue par la fibre dans les réacteurs de coagulation et de lavage peut être ajustée au moyen de rouleaux de détour, réglables selon différentes positions.

Le procédé de l'invention comporte une étape caractéristique d'interruption de la coagulation. Il peut s'agir d'un simple lavage à l'eau de la fibre partiellement coagulée. Cette étape est essentielle pour la formation de fibres creuses multi membranaires puisqu'il a comme objectif d'arrêter la réaction de coagulation, de parfaire la condensation des chaînes de polysaccharides dans une membrane et de favoriser la création des espaces inter membranaires. C'est aussi le fait d'arrêter la coagulation de la fibre de polysaccharide qui permet de former le canal central de la fibre creuse en arrêtant la coagulation avant la prise en hydrogel du coeur de la fibre, sans avoir besoin de préformer la cavité à l'aide d'un élément central à diamètre fixe comme dans une filière annulaire.

Cette coagulation séquencée permet ainsi de contrôler l'épaisseur de chaque membrane ainsi que le diamètre interne du canal central formé au coeur de la fibre. Des fibres avec des diamètres internes très faibles, jusqu'à 50 µm, ont ainsi pu être élaborées grâce au procédé de l'invention.

Par rapport aux procédés de filage connus, le filage par voie humide à filière normale, tubulaire, et à coagulation interrompue est une méthode avantageuse car elle peut être appliquée à une gamme large d'assemblages macromoléculaires parmi lesquels les polysaccharides naturels ou naturels modifiés, comme par exemple le chitosane, l'acide hyaluronlque, les alginates, les pectines ou la carboxyméthylcellulose (CMC).

Lorsque le polysaccharide est le chitosane, celui-ci est dissout dans une solution aqueuse d'acide acétique puis la solution de chitosane ainsi obtenue est dégazée. Dans un exemple précis de réalisation d'un chitosane ayant un degré d'acétylation inférieur ou égal à 5% et une masse molaire de l'ordre de 500 000 g/mol, la concentration de la solution de chitosane doit être comprise entre 1,5 et 6% en poids. Au-dessous de 1,5%, la solution n'est pas filable, ne permettant pas d'extruder un jonc continu de solution de chitosane; au-dessus de 6%, la viscosité de la solution est trop élevée.

Dans une variante de réalisation, le procédé comporte une étape subséquente de déshydratation partielle des fibres obtenues, dans des conditions adaptables permettant de diminuer la proportion d'eau dans l'hydrogel et ainsi moduler la rigidité des membranes et donc des fibres.

Enfin, le procédé selon l'invention comporte aussi une étape de réception, notamment par enroulement, de la fibre creuse obtenue.

Selon un deuxième aspect, l'invention concerne des fibres creuses multi membranaires constituées d'un même assemblage macromoléculaire filable par coagulation, notamment un polysaccharide naturel ou naturel modifié, lesdites fibres comportant sur toute leur longueur et de l'extérieur vers l'intérieur, n membranes coaxiales, séparées les unes des autres par un espace inter membranaire, n étant un nombre entier supérieur ou égal à 2.

S'agissant de fibres à base de polysaccharide, celui-ci est à l'état d'hydrogel physique plus ou moins rigide et présente une porosité comprise entre 200 et 500 nm. Elles peuvent être partiellement séchées, pour en augmenter la rigidité et en diminuer la porosité.

S'agissant de la structure physique des fibres selon l'invention, elle comporte n membranes coaxiales, indépendantes les unes des autres et séparés entre elles par un espace inter membranaire, qui peut être compris entre 5 et 20 µm.

Chaque membrane est délimitée par une face externe et une face interne. La face externe de la fibre est la face externe de la membrane située le plus vers l'extérieur et qui forme la couronne de la fibre. De manière similaire, la face interne délimitant le canal central de la fibre creuse est la face interne de la nième membrane, c'est-à-dire celle qui est située le plus vers l'intérieur de la fibre et qui est formée au cours du dernier cycle coagulation/lavage.

Le diamètre externe des fibres creuses multi membranaires de la présente invention peut être de l'ordre de 100 µm jusqu'au-delà de 2,5 mm. Le diamètre interne du canal central de ces fibres peut être de l'ordre de 50 µm jusqu'au-delà de 1 mm. L'épaisseur de chaque membrane peut être de l'ordre de 10 µm jusqu'au-delà de 1 mm.

Le polysaccharide est choisi dans le groupe : chitosane, acide hyaluronique, alginates, pectines, carboxyméthylcellulose.

Dans une variante préférée de réalisation, le polysaccharide est le chitosane. Le chitosane, dérivé désacétylé de la chitine, est un copolymère linéaire de D-glucosamine et N-acétyl-D-glucosamine liés β,(1→4). Il est obtenu par désacétylation partielle de la chitine et présente la particularité d'être soluble dans les acides dilués, lorsqu'il est suffisamment désacétylé. Ce composé est connu pour ses propriétés de biodégradabilité, biocompatibilité, biorésorbabilité et de bioactivité.

Lorsque le polysaccharide constituant la fibre selon l'invention est le chitosane, les fibres à l'état d'hydrogel physique contiennent 96% d'eau et 4% de chitosane, avant tout traitement de déshydratation.

Un dispositif de filage pour la mise en oeuvre du procédé décrit plus haut, peut comporter les principaux éléments suivants:
- des moyens d'extrusion aptes à former un jonc plein et continu d'une solution de polysaccharide;
- au moins un réacteur de coagulation rempli d'agent coagulant et un réacteur de lavage rempli d'agent de lavage dans lesquels séjourne successivement le jonc en question pour obtenir la coagulation localisée du polysaccharide et ainsi obtenir une fibre de polysaccharide partiellement coagulée;
- des moyens d'entraînement et d'enroulement de la fibre de polysaccharide partiellement coagulée, lesdits moyens d'enroulement comprenant notamment un moteur d'enroulement, une bobine d'enroulement et des rouleaux ;
- des pompes pour le renouvellement des solutions dans chaque réacteur ;
- des récipients de stockage de l'agent coagulant et de l'agent de lavage.

Dans un mode précis de réalisation de l'invention dans un cadre expérimental en laboratoire, on a utilisé, comme moyens d'extrusion d'une solution de 1,5 à 6% en poids de chitosane à DA inférieur ou égal à 5% dans une solution aqueuse d'acide acétique un pousse seringue, par exemple du type (BIOBLOCK SCIENTIFIC Model A-99) et une seringue, par exemple en polymère synthétique de 20 mL, avec un diamètre de sortie, correspondant à la filière, de 1,9 mm. Le réacteur de coagulation contenait une solution aqueuse de soude ; le réacteur de lavage contenait de l'eau permutée; il s'agissait de deux récipients de capacité d'environ 2,5 l, avec un diamètre de 12 cm et une hauteur de 25 cm. Les moyens d'enroulement de la fibre de polysaccharide partiellement coagulée comprenaient un moteur d'enroulement, une bobine d'enroulement, par exemple en PVC ayant un diamètre de 4 cm, et des rouleaux de détour, par exemple en PVC ayant un diamètre de 1,3 cm et une longueur de 8 cm.

Dans ce montage expérimental, les rouleaux de détour permettaient de faire passer la fibre successivement d'un bain à l'autre lors du déroulement de chaque cycle coagulation/lavage, leur emplacement respectif dans le réacteur permettant d'adapter le temps de séjour dans le bain correspondant. De manière industrielle, les différents cycles sont bien sûr réalisés en continu et l'installation comporte des moyens de contrôle des conditions de coagulation et d'interruption de la coagulation, notamment contrôle de la température des bains, du débit de circulation des bains dans les réacteurs, de la vitesse d'entraînement de la fibre, de la concentration du bain de coagulation et éventuellement du bain d'interruption de la coagulation si celui-ci n'est pas un simple bain de lavage à l'eau, du débit d'extrusion.

### Exemple de réalisation : Fibre creuse de chitosane avec quatre membranes

### 1. Préparation de la solution de chitosane

Le chitosane utilisé pour ce travail est fourni par la société Mahtani Chitosan (lot 113). Il est issu de plumes de calamars, est faiblement acétylé (degré d'acétylatlon de 1,5% ; le degré d'acétylation représente le pourcentage en nombre, ou fraction molaire, des résidus N-acétyl glucosamine dans le polymère de chitosane) et a une masse molaire moyenne en masse de 517 000 g/mol. Une solution filable de chitosane à 5% (w/w) est préparée en dissolvant le chitosane dans l'eau et en ajoutant de l'acide acétique dans des conditions stoechiométriques par rapport aux fonctions amine primaire du chitosane. La solution ainsi obtenue est dégazée.

### 2. Formation des fibres

Les conditions suivantes de filage pour l'élaboration des fibres ont été employées:
- Solution de chitosane : Chitosane 5% (w/w)
- Débit d'extrusion: 35,4 mL/h
- Concentration du bain de neutralisation : NaOH 0,1M
- Vitesse d'étirage : 0,19 cm/s
- Volume d'agent coagulant dans le réacteur de coagulation: 2,5 L
- Volume d'eau permutée dans le réacteur de lavage : 2,5 L.
L'extrusion intervient directement dans le bain de coagulation, les moyens d'extrusion et le réacteur de coagulation étant disposés de telle sorte qu'il n'y ait pas d'espace d'air entre la sortie de filière et le bain de coagulation.

### 3. Formation de fibres multi membranaires - conditions opératoires :

- Premier bain de coagulation : NaOH 0,10 M
   Temps de coagulation : 114 s
- Premier bain de lavage à l'eau
   Temps de lavage : 60 s
- Deuxième bain de coagulation: NaOH 0,10 M
   Volume du bain de coagulation : 100 mL
   Temps de coagulation : 60 s
- Deuxième bain de lavage à l'eau
   Volume du bain de lavage : 200 mL.
   Temps de lavage : 60 s
- Troisième bain de coagulation: NaOH 0,10 M
   Volume du bain de coagulation : 100 mL
   Temps de coagulation: 90 s
- Troisième bain de lavage à l'eau
   Volume du bain de lavage: 200 mL
   Temps de lavage : 60 s
- Quatrième bain de coagulation: NaOH 0,10M
   Volume du bain de coagulation: 100 mL
   Temps de coagulation: 120 s
- Quatrième bain de lavage à l'eau
   Volume du bain de lavage: 200 mL
   Temps de lavage : 60 s
Eventuellement suivi d'un lavage final pour enlever la solution liquide de chitosane restant dans le canal central de la fibre.

### 4. Caractéristiques de la fibre creuse de chitosane multi membranaire

a) Les dimensions de la fibre sont:
   - Diamètre externe : 2,5 mm
   - Diamètre interne du canal central: 1,1 mm
   - Epaisseur de chaque membrane comprise entre 200 et 220 µm.

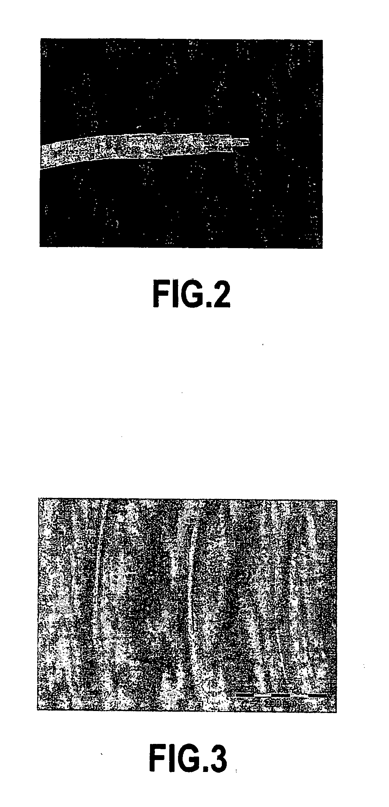

La fibre de chitosane avec quatre membranes ainsi obtenue est représentée dans la figure 2. La figure 3 montre l'image de la même fibre agrandie, vue en section transversale.

Les fibres creuses multi membranaires selon l'invention présentent de nombreux avantages. Des fibres comportant un nombre variable de membranes peuvent être proposées pour chaque application spécifique. Lorsqu'elles sont obtenues sous forme d'hydrogel physique, elles sont poreuses avec une taille de pores entre 200-500 nm, et peuvent être séchées partiellement pour obtenir des formes plus ou moins rigides.

Les fibres creuses multi membranaires à base du chitosane sont un excellent candidat pour l'élaboration de biomatériaux grâce à la biocompatibilité, biodégradabilité, bioactivité et le coût modéré du chitosane.

Ces fibres peuvent servir de bioréacteurs pour l'ingénierie tissulaire puisque le système multi membranaire est très bien adapté à la régénération de tissus multicouches à géométrie cylindrique comme les vaisseaux sanguins. Les espaces inter membranaires peuvent être colonisés avec différents types de cellules, afin de former un système de co-culture cellulaire. Ainsi, dans les fibres creuses avec quatre membranes concentriques, il y a trois cavités annulaires où il est possible de déposer les trois différents types des cellules présentes dans les vaisseaux sanguins : les cellules endothéliales, les cellules musculaires lisses et les cellules du tissu conjonctif. La faible porosité des membranes les rend imperméables aux cellules colonisant le bioréacteur, qui ne peuvent diffuser au travers.

D'autres applications des fibres creuses multi membranaires selon l'invention concernent leur utilisation pour l'élaboration de bioréacteurs complexes pour la co-culture de différents types de cellules et/ou pour la libération contrôlée de différents types de principes actifs en combinaison éventuellement avec les cellules.

### Références bibliographiques:

1. Liu C, Bai R. Preparation of chitosan /cellulose acetate blend hollow fibers for adsorptive performance. J Membr Sci 2005; 267: 68-77.
2. Modrzejewska Z, Eckstein W. Chitosan hollow fiber membranes. Biopolymers 2004; 73:61-68.
3. Qin J-J, Gu J, Chung T-S. Effect of wet and dry-jet wet spinning on the shear induced orientation during the formation of ultrafiltration hollow fiber membranes. J Membr Sci 2001; 182: 57-75.
4. Pittalis F, Bartoli F, Glovannoni G. Process for the preparation of chitosan fibers. US Patent 4 464 321, 1984.
5. Vincent T, Guibal E. Cr (VI) Extraction using aliquat 336 in a hollow fiber module made of chitosan. Ing Eng Chem Res 2001; 40 : 1406-1411.
6. Wang D, Li K, Teo WK. Préparation of annular hollow fibre membranes. J Membr Sci 2000; 166: 31-39.
7. Tamura H, Tsuruta Y, Tokura S. Préparation of chitosan-coated alginate filament. Mater Sci Eng C 2002; 20: 143-147.

## Revendications

1. Procédé de préparation d'une fibre creuse par filage voie humide sous coagulation, comprenant :
a) une étape de préparation d'une solution filable d'un assemblage macromoléculaire coagulable;
b) une étape d'extrusion de la solution de l'assemblage macromoléculaire coagulable à travers une filière normale, notamment tubulaire ;
c) au moins un cycle de coagulation partielle comprenant d'une part une étape de coagulation consistant à introduire la solution de l'assemblage macromoléculaire coagulable extrudée dans un bain de coagulation contenant un agent coagulant dont la diffusion dans la solution permet de faire passer localement l'assemblage macromoléculaire à l'état coagulé, dans des conditions permettant d'obtenir une fibre qui, en section transversale, présente une section partiellement coagulée et d'autre part une étape d'interruption de la coagulation ;
d) et une étape de réception, notamment par enroulement, de la fibre creuse obtenue,
**caractérisé en ce que** la solution filable est une solution de polysaccharide, notamment choisi dans le groupe formé par le chitosane, l'acide hyaluronique, les alginates, les pectines, la carboxyméthylcellulose, et **en ce que** l'agent coagulant permet de faire passer le polysaccharide à l'état d'hydrogel physique.

2. Procédé selon la revendication 1 pour la préparation d'une fibre creuse mono membranaire **caractérisé en ce qu'**il comporte un seul cycle de coagulation partielle.

3. Procédé selon la revendication 1 pour la préparation d'une fibre creuse multi membranaire, à n membranes, caractérisé ce qu'il comporte n cycles successifs de coagulation partielle, n étant un chiffre entier égal ou supérieur à deux.

4. Procédé selon la revendication 2 ou 3 pour la préparation d'une fibre creuse à canal central **caractérisé en ce qu'**il comporte une étape d'élimination, notamment par lavage, de la solution restant dans la section centrale non coagulée de la fibre à l'issue du dernier cycle de coagulation partielle.

5. Procédé selon la revendication 3 pour la préparation d'une fibre creuse multi membranalre sans canal central **caractérisé en ce qu'**il comporte une dernière étape de coagulation de la solution restant dans la section centrale non coagulée après le dernier cycle de coagulation partielle.

6. Procédé selon l'une quelconque des revendications 1 à 5, **caractérisé en ce que** l'étape d'interruption de coagulation consiste en un simple lavage à l'eau de la fibre partiellement coagulée.

7. Procédé selon l'une quelconque des revendications 1 à 6, **caractérisé en ce que**, la solution filable étant une solution d'un chitosane ayant un degré d'acétylation inférieur ou égal à 5% et une masse molaire de l'ordre de 500 000 g/mol, l'étape a) de préparation comprend la dissolution dudit chitosane dans une solution aqueuse d'acide acétique pour obtenir une concentration de 1,5 à 6% en poids de chitosane, puis le dégazage de celle-ci.

8. Procédé selon l'une des revendications 1 à 7, **caractérisé en ce qu'**il comprend une étape subséquente de déshydratation partielle de la fibre obtenue, dans des conditions adaptables permettant de diminuer la proportion d'eau dans l'hydrogel physique.

9. Fibre creuse multi membranaire qui est constituée d'un même assemblage macromoléculaire filable par coagulation et qui comporte au moins deux membranes coaxiales, séparées l'une de l'autre par un espace inter membranaire, l'assemblage macromoléculaire étant un polysaccharide à l'état d'hydrogel physique choisi dans le groupe : chitosane, acide hyaluronique, alginates, pectines, carboxyméthylcellulose.

10. Fibre creuse multi membranaire selon la revendication 9, comportant les caractéristiques suivantes: un diamètre externe de l'ordre de 100µm à 2,5 mm, une épaisseur des membranes de l'ordre de 10µm à 1 mm et éventuellement un diamètre interne de l'ordre de 50µm à 1 mm.

11. Fibre creuse multi membranaire en polysaccharide selon la revendication 10, ayant un diamètre externe de l'ordre de 2,5 mm, une épaisseur des membranes 200 à 220 µm et un diamètre interne de l'ordre de 1,1 mm.

12. Fibre creuse multi membranaire selon l'une quelconque des revendications 9 à 11, ayant une porosité comprise entre 200 et 500 nm.

13. Fibre creuse multi membranaire de chitosane selon l'une quelconque des revendications 9 à 12, dont l'hydrogel physique contient de l'ordre de 4% de chitosane et de l'ordre de 96% eau.

14. Fibre creuse multi membranaire selon l'une quelconque des revendications 9 à 13, dans laquelle l'hydrogel physique est en état de déshydratation partielle.

15. Utilisation d'une fibre creuse selon l'une des revendications 9 à 14 ou obtenue par le procédé selon l'une des revendications 1 à 8 pour élaborer des biomatériaux.

16. Utilisation selon la revendication 15 pour l'élaboration de bioréacteurs pour l'ingénierie tissulaire.

17. Utilisation selon la revendication 16 pour l'élaboration de bioréacteurs mixtes à relargage contrôlé de principes actifs ou de macromolécules d'intérêt biologique.

18. Utilisation selon la revendication 17 pour l'élaboration de membranes d'intérêt biologique.

## Patentansprüche

1. Verfahren zur Herstellung einer Hohlfaser durch Naßspinnen unter Koagulation, umfassend:
a) einen Schritt zur Zubereitung einer spinnbaren Lösung einer koagulierbaren makromolekularen Anordnung;
b) einen Schritt zum Extrudieren der Lösung der koagulierbaren makromolekularen Anordnung durch eine normale, insbesondere röhrenförmige Düse;
c) wenigstens einen Teilkoagulationszyklus, der einerseits einen Koagulationsschritt umfaßt, welcher darin besteht, die extrudierte Lösung der koagulierbaren makromolekularen Anordnung in ein Koagulationsbad einzubringen, das ein Koaguliermittel enthält, dessen Diffundieren in die Lösung ermöglicht, die makromolekulare Anordnung lokal in den koagulierten Zustand zu überführen, unter Bedingungen, die den Erhalt einer Faser ermöglichen, welche im Querschnitt einen teilkoagulierten Abschnitt aufweist, sowie andererseits einen Schritt zur Unterbrechung der Koagulation; und
d) einen Schritt zur Aufnahme, insbesondere durch Aufwickeln, der erhaltenen Hohlfaser,
**dadurch gekennzeichnet, daß** die spinnbare Lösung eine Lösung eines Polysaccharids ist, das insbesondere aus der Gruppe, die von Chitosan, Hyaluronsäure, Alginaten, Pektinen, Carboxymethylcellulose gebildet ist, ausgewählt ist, und daß das Koaguliermittel ermöglicht, das Polysaccharid in den Zustand physikalischen Hydrogels zu überführen.

2. Verfahren nach Anspruch 1, für die Herstellung einer Einmembran-Hohlfaser, **dadurch gekennzeichnet, daß** es einen einzigen Teilkoagulationszyklus umfaßt.

3. Verfahren nach Anspruch 1, für die Herstellung einer Multimembran-Hohlfaser mit n Membranen, **dadurch gekennzeichnet, daß** es n aufeinanderfolgende Teilkoagulationszyklen umfaßt, wobei n eine ganze Zahl gleich oder größer als zwei ist.

4. Verfahren nach Anspruch 2 oder 3, für die Herstellung einer Hohlfaser mit mittlerem Kanal, **dadurch gekennzeichnet, daß** es einen Schritt zum Entfernen, insbesondere durch Waschen, der am Ende des letzten Teilkoagulationszyklus im nicht koagulierten mittleren Abschnitt der Faser verbleibenden Lösung umfaßt.

5. Verfahren nach Anspruch 3, für die Herstellung einer Multimembran-Hohlfaser ohne mittleren Kanal, **dadurch gekennzeichnet, daß** es einen letzten Schritt zum Koagulieren der nach dem letzten Teilkoagulationszyklus im nicht koagulierten mittleren Abschnitt verbleibenden Lösung umfaßt.

6. Verfahren nach einem der Ansprüche 1 bis 5, **dadurch gekennzeichnet, daß** der Schritt zur Unterbrechung der Koagulation in einem einfachen Waschen mit Wasser der teilkoagulierten Faser besteht.

7. Verfahren nach einem der Ansprüche 1 bis 6, **dadurch gekennzeichnet, daß** wenn die spinnbare Lösung eine Lösung eines Chitosans mit einem Acetylierungsgrad kleiner oder gleich 5 % und einer molaren Masse in der Größenordnung von 500 000 g/mol ist, der Zubereitungsschritt a) das Auflösen des Chitosans in einer wäßrigen Essigsäurelösung, um eine Chitosan-Konzentration von 1,5 bis 6 Gew.-% zu erreichen, anschließend deren Entgasen umfaßt.

8. Verfahren nach einem der Ansprüche 1 bis 7, **dadurch gekennzeichnet, daß** es einen anschließenden Schritt zur teilweisen Dehydratation der erhaltenen Faser unter anpaßbaren Bedingungen, die ermöglichen, den Wasseranteil in dem physikalischen Hydrogel zu verringern, umfaßt.

9. Multimembran-Hohlfaser, die aus einer durch Koagulation spinnbaren gleichen makromolekularen Anordnung besteht und die wenigstens zwei koaxiale Membranen umfaßt, welche durch einen Membranzwischenraum voneinander getrennt sind, wobei die makromolekulare Anordnung ein Polysaccharid im Zustand physikalischen Hydrogels ist, das aus der Gruppe Chitosan, Hyaluronsäure, Alginate, Pektine, Carboxymethylcellulose ausgewählt ist.

10. Multimembran-Hohlfaser nach Anspruch 9, mit den folgenden Merkmalen:
einem Außendurchmesser in der Größenordnung von 100 µm bis 2,5 mm, einer Dicke der Membranen in der Größenordnung von 10 µm bis 1 mm und eventuell einem Innendurchmesser in der Größenordnung von 50 µm bis 1 mm.

11. Multimembran-Hohlfaser aus Polysaccharid nach Anspruch 10, mit einem Außendurchmesser in der Größenordnung von 2,5 mm, einer Dicke der Membranen von 200 bis 220 µm et einem Innendurchmesser in der Größenordnung von 1,1 mm.

12. Multimembran-Hohlfaser nach einem der Ansprüche 9 bis 11, die eine Porosität zwischen 200 und 500 nm aufweist.

13. Multimembran-Hohlfaser aus Chitosan nach einem der Ansprüche 9 bis 12, deren physikalisches Hydrogel in der Größenordnung von 4 % Chitosan und in der Größenordnung von 96 % Wasser enthält.

14. Multimembran-Hohlfaser nach einem der Ansprüche 9 bis 13, wobei das physikalische Hydrogel sich im Zustand teilweiser Dehydratation befindet.

15. Verwendung einer Hohlfaser nach einem der Ansprüche 9 bis 14 oder gewonnen durch das Verfahren nach einem der Ansprüche 1 bis 8, für die Herstellung von Biomaterialien.

16. Verwendung nach Anspruch 15, für die Herstellung von Bioreaktoren für die Gewebetechnik.

17. Verwendung nach Anspruch 16, für die Herstellung von gemischten Bioreaktoren mit kontrollierter Freisetzung von Wirkstoffen oder von Makromolekülen von biologischem Interesse.

18. Verwendung nach Anspruch 17, für die Herstellung von Membranen von biologischem Interesse.

## Claims

1. A method for preparing a hollow fiber by wet spinning under coagulation, comprising :
a) a step for preparing a spinnable solution of a coagulable macromolecular assembly,
b) a step for extruding the coagulable macromolecular assembly solution through a normal, notably tubular, die;
c) at least one partial coagulation cycle comprising a coagulation step on the one hand consisting of introducing the extruded solution of the coagulable macromolecular assembly into a coagulation bath containing a coagulant agent, the diffusion of which in the solution allows the macromolecular assembly to locally pass into the coagulated state, under conditions allowing a fiber to be obtained which, cross-sectionally, has a partly coagulated section and a step for interrupting the coagulation on the other hand;
d) and a step for receiving, notably by winding up, the obtained hollow fiber, **characterized in that** the spinnable solution is a solution of polysaccharide, notably selected in the group formed by chitosan, hyaluronic acid, alginates, pectins, carboxymethylcellulose and **in that** the coagulant agent allows the polysaccharide to pass into the physical hydrogel state.

2. The method according to claim 1 for preparing a mono-membrane hollow fiber **characterized in that** it includes a single partial coagulation cycle.

3. The method according to claim 1 for preparing a multi-membrane hollow fiber with n membranes, **characterized in that** it includes n successive cycles of partial coagulation, n being an integer equal to or greater than 2.

4. The method according to claim 2 or 3 for preparing a hollow fiber with a central channel, **characterized in that** it includes a step for removing, notably by washing, the solution remaining in the non-coagulated central section of the fiber at the end of the last partial coagulation cycle.

5. The method according to claim 3 for preparing a multi-membrane hollow fiber without any central channel, **characterized in that** it includes a second step for coagulating the solution remaining in the non-coagulated central section after the last partial coagulation cycle.

6. The method according to any of claims 1 to 5, **characterized in that** the coagulation interruption step consists in a simple washing with water of the partially coagulated fiber.

7. The method according to any of claims 1 to 6, **characterized in that**, as the spinnable solution is a solution of a chitosan having an acetylation degree less than or equal to 5% and a molar mass of the order 500,000 g/mol, the preparation step a) comprises the dissolution of said chitosan in an aqueous acetic acid solution in order to obtain a concentration from 1.5 to 6% by weight of chitosan, and then degassing of the latter.

8. The method according to any of claims 1 to 7, **characterized in that** it comprises a subsequent step for partial dehydration of the obtained fiber, under adaptable conditions allowing reduction of the water proportion in the physical hydrogel.

9. A multi-membrane hollow fiber which consists of a same macromolecular assembly, spinnable by coagulation, and which includes at least two coaxial membranes, preferably separated from each other by an inter-membrane space, the macromolecular assembly being a polysaccharide in the physical hydrogel state, selected from the group: chitosan, hyaluronic acid, alginates, pectins, carboxymethylcellulose.

10. The multi-membrane hollow fiber according to claim 9 including the following characteristics: an outer diameter of the order of 100 µm to 2.5 mm, a thickness of the membranes of the order of 10 µm to 1 mm, and optionally an inner diameter of the order of 50 µm to 1 mm.

11. The multi-membrane hollow fiber according to claim 10 having an outer diameter of the order of 2.5 mm, a thickness of the membranes of 200 to 220 µm, an inner diameter of the order of 1.1 mm.

12. The multi-membrane hollow fiber according to any of claims 9 to 11 having a porosity comprised between 200 and 500 nm.

13. The multi membrane of chitosan according to any of claims 9 to 12, the physical hydrogel of which contains of the order of 4% of chitosan and of the order of 96% of water.

14. The multi-membrane hollow fiber according to any of claims 9 to 13 wherein the physical hydrogel is in a partial dehydration state.

15. The use of a hollow fiber according to any of claims 9 to 14 or obtained by the method according to any of claims 1 to 8 for elaborating biomaterials.

16. The use according to claim 15 for elaborating bioreactors for tissue engineering.

17. The use according to claim 16 for elaborating mixed bioreactors with controlled desalting of active ingredients or of macromolecules of biological interest.

18. The use according to claim 17 for elaborating membranes of biological interest.
